# EUROPÄISCHE PATENTSCHRIFT

(11) **EP 1 028 877 B1**
(45) Veröffentlichungstag und Bekanntmachung des Hinweises auf die Patenterteilung: **11.09.2002**
(21) Anmeldenummer: 98966891.8
(22) Anmeldetag: 16.11.1998
(51) Int. Cl.: B60T 13/00

(54) **BREMSKRAFTÜBERSETZUNGSEINRICHTUNG INSBESONDERE FÜR KRAFTFAHRZEUGE**
BRAKE-POWER TRANSMISSION DEVICE, ESPECIALLY FOR MOTOR VEHICLES
DISPOSITIF DE TRANSMISSION DE LA FORCE DE FREINAGE, NOTAMMENT POUR VEHICULES AUTOMOBILES

(30) Priorität: 14.11.1997 DE 19750514; 05.03.1998 DE 19809363
(43) Veröffentlichungstag der Anmeldung: 23.08.2000
(73) Patentinhaber: Continental Teves AG & Co. oHG, 60488 Frankfurt am Main (DE)
(72) Erfinder: SCHONLAU, Jürgen, D-65396 Walluf (DE); FEIGEL, Hans-Jörg, D-61191 Rosbach (DE); HARTH, Ralf, D-64297 Darmstadt (DE); VON HAYN, Holger, D-61118 Bad Vilbel (DE); LINKENBACH, Steffen, D-65760 Eschborn (DE); RITTER, Wolfgang, D-61440 Oberursel (DE); WASEL, Detlef, D-60437 Frankfurt am Main (DE)
(86) Internationale Anmeldenummer: EP9807314
(87) Internationale Veröffentlichungsnummer: WO99026826

(56) Entgegenhaltungen:
- WO-A-95/01272
- DE-C- 4 234 043
- GB-A- 2 271 402

## Beschreibung

Die Erfindung betrifft eine Bremskraftübersetzungsvorrichtung, insbesondere für Kraftfahrzeuge mit einem betätigbaren Eingangsglied umfassend einen Vertilkolben, einem Ausgangsglied zur Beaufschlagung insbesondere eines Hauptbremszylinders mit einer Verstärkungskraft und mit einem in einem Steuergehäuse angeordneten Steuerventil zur Regelung der Verstärkungskraft, wobei im Bereich eines Reaktionsglieds ein axial bewegbares Druckstück vorgesehen ist, welches sich an dem Eingangsglied oder dem Steuergehäuse abstützt und dadurch eine Änderung des Kraftübersetzungsverhältnis ermöglicht

Eine derartige Bremskraftübersetzungsvorrichtung ist z.B. aus der EP 705 190 B1 bekannt. Ein Ventilkolben der Vorrichtung steht in Wirkverbindung mit einem federnd vorgespannten Druckstück, welches zusammen mit dem Ventilkolben axial in Richtung eines Reaktionsglied bewegbar ist. Sobald eine bestimmte, vorgegebene Eingangskraft vorliegt, welche die Vorspannkraft der auf das Druckstück wirkenden Feder überwindet, schlägt das Druckstück an dem Steuergehäuse an und überträgt einen Kraftanteil auf das Reaktionsglied, so daß es zu einer Veränderung des wirksamen Flächenverhältnisses und mit dieser Maßnahme zu einer Änderung der Verstärkerkennlinie kommt. Schließlich ist das Druckstück formschlüssig mit dem Steuergehäuse gekoppelt. Dies bedeutet, daß der Fahrer in dem Betriebsbereich oberhalb der vorgegebenen Eingangskraft für eine Steigerung der Bremskraft weniger Fußkraft aufwenden muß, als dies in dem Betriebsbereich unterhalb der vorgegebenen Eingangskraft notwendig ist. Die Änderung der Kennlinie ist also abhängig von der herrschenden Eingangskraft (Fußkraft).

Die bekannte Bremskraftübersetzungsvorrichtung bietet dem Fahrzeugführer ein unkomfortables Funktionsverhalten. Dies liegt darin begründet, daß die Übergänge zwischen den verschiedenen Verstärkungskennlinien störend wirken und die Dosierung der Bremskraft erschweren. Ferner muß bei einer Notbremsung immer erst eine bestimmte Fußkraft überschritten werden, bis die Bremskraftübersetzungsvorrichtung ein erhöhtes Verstärkungsverhältnis zur Verfügung stellt. Es kann somit wertvolle Zeit verstreichen, bis die vorbestimmte Eingangskraft aufgebaut ist. Bei einer Notbremsung ist es wichtig, die Bremskraft schnell und ohne unnötigen Zeitverlust bereitzustellen, denn jede Verzögerung ist mit einer Verlängerung des Bremsweges verbunden. Andererseits wird die erhöhte Verstärkungskraft bei der bekannten Bremskraftübersetzungsvorrichtung auch zur Verfügung gestellt, wenn die Eingangskraft nur geringfügig oberhalb des vorgegebenen Kraft-Schwellwertes ist und die erhöhte Verstärkungskraft grundsätzlich nicht notwendig wäre.

Aufgabe der vorliegenden Erfindung ist es daher, eine Bremskraftübersetzungsvorrichtung bereitzustellen, welche eine erhöhte Verstärkung nur in den Fällen ermöglicht, in denen diese von dem Kraftfahrzeugführer nachgefragt wird und die auf einer möglichst einfachen, kostengünstigen Sensierung der Bremsbetätigungsgeschwindigkeit basiert, so daß unmittelbar, nach überschreiten einer vorbestimmten Betätigungsgeschwindigkeit,ohne zeitliche Verzögerung, eine maximale Verstärkungskraft bereitgestellt werden kann. Mit anderen Worten soll die Betätigungsgeschwindigkeit, mit der beispielsweise ein Bremspedal niedergetreten wird, als Kriterium zur Veränderung des Verstärkungsverhältnisses herangezogen werden. Ferner soll die Bremskraftübersetzungsvorrichtung ein komfortables, insbesondere gut regelbares Betriebsverhalten aufweisen.

Diese Aufgabe wird erfindungsgemäß dadurch gelöst, daß das Druckstück für eine Vergrößerung der Verstärkung in Abhängigkeit von einer Relativbewegung zwischen dem Eingangsglied und dem Ausgangsglied oder diesen zugeordneten Bauteilen mittels einer Kupplungsvorrichtung mit dem Steuergehäuse lösbar verbindbar ist. Ein maßgeblicher Vorteil der Erfindung ist, daß das Auslösekriterium auf der relativen Verschiebungsgeschwindigkeit zwischen Ventilkolben und Steuergehäuse basiert.

Die erfindungsgemäße Bremskraftübersetzungsvorrichtung erlaubt also in vorteilhafter Weise eine lösbare Kupplung des Steuergehäuses mit dem Druckstück, wenn das Eingangsglied mit großer Geschwindigkeit betätigt wird und deshalb eine Relativbewegung zwischen dem Eingangsglied und dem Ausgangsglied bzw. diesen zugeordneten, dem Fachmann grundsätzlich geläufigen, Bauteilen eintritt. Folglich bietet sich die Möglichkeit, das Übersetzungsverhältnis mechanisch auf Basis der Betätigungsgeschwindigkeit zu beeinflussen.

Bei einer vorteilhaften Ausführungsform ist dem Druckstück ein an dem Steuergehäuse angelegtes Kupplungselement zugeordnet, welches formschlüssig sowie lösbar an dem Druckstück angreift. Gemäß dem Ausführungsbeispiel der Erfindung ist ein Steuerorgan einstückig mit dem Kupplungselement ausgebildet.

Bei einer weiteren Ausführungsform der Erfindung ist ein separates Steuerorgan mit einer Steuerfläche versehen und weist einen Sperrabschnitt auf, welcher Sperrabschnitt in einer ersten Schaltstellung des Steuerorgans in einen Kanal für das Kupplungselement eingreift und in einer zweiten Schaltstellung den Kanal für das Kupplungselement freigibt. Die Funktionstrennung zwischen Steuerung (Steuerorgan) und Kupplung (Kupplungselement) besitzt einige Vorteile. Einerseits führt sie zu einer besonders betriebssicheren Funktion, weil dadurch ausgeschlossen wird, daß das Kupplungselement in einer Zwischenstellung verkantet. Andererseits läßt sich die gesamte Vorrichtung dadurch in hinblick auf Toleranzen einfacher herstellen.

Weitere Abwandlungen der Erfindung gehen aus den Unteransprüchen hervor. Die Erfindung wird in der nachfolgenden Beschreibung anhand von vier Ausführungsbeispielen, die in der Zeichnung dargestellt sind, näher erläutert. In der Zeichnung zeigt:
- Fig. 1: eine erste Ausführungsform der Bremskraftübersetzungsvorrichtung im Längsschnitt, teilweise weggebrochen in der Normalbremsstellung;
- Fig. 2: die Bremskraftübersetzungsvorrichtung gemäß Fig. 1 in der aktiven Notbremsstellung;
- Fig. 3: eine zweite Ausführungsform der erfindungsgemäßen Bremskraftübersetzungsvorrichtung in Normalbremsstellung;
- Fig. 4: Bremskraftübersetzungsvorrichtung gemäß Fig. 3 in aktiver Notbremsstellung;
- Fig. 5: eine dritte Ausführungsform der Bremskraftübersetzungsvorrichtung mit einem separaten Steuerorgan;
- Fig. 6: ein viertes Ausführungsbeispiel der Bremskraftübersetzungsvorrichtung und
- Fig. 7: das Ausführungsbeispiel gemäß Fig. 6 in aktiver Notbremsstellung;
- Fig. 8: eine fünfte Ausführungsform in Normalbremsstellung;
- Fig. 9: eine sechste Ausführungsform;
- Fig. 10: einzelne Bauteile der sechsten Ausführungsform in größerem Maßstab.

Die in der Figur gezeichnete Steuereinheit einer Bremskraftübersetzungsvorrichtung 1 dient zur Steuerung und Regelung des Übersetzungsverhältnisses in einer Kraftfahrzeugbremsanlage. Die Bremskraftübersetzungsvorrichtung 1 umfaßt darüber hinaus ein nicht gezeichnetes Verstärkergehäuse, welches durch eine nicht gezeigte axial bewegliche Wand in eine Unterdruckkammer und in eine Arbeitskammer unterteilt ist. Die bewegliche Wand besteht aus einem Membranteller und einer daran anliegenden flexiblen Membran, die an einem äußeren Umfang des Membrantellers und dem Verstärkergehäuse eine Rollmembran als Abdichtung bildet. Weiterhin umfaßt die Bremskraftübersetzungsvorrichtung als Eingangsglied 2 eine Betätigungsstange und als Ausgangsglied 3 eine Druckstange, welche beispielsweise auf einen nicht gezeichneten hydraulischen Hauptbremszylinder wirkt. Ein durch das Eingangsglied 2 betätigbares Steuerventil 4 ist in einem, in dem Verstärkergehäuse abgedichtet geführten, die bewegliche Wand tragenden Steuergehäuse 5 untergebracht und besteht aus einem am Steuergehäuse 5 ausgebildeten ersten Dichtsitz 6, einem an einem mit dem Eingangsglied 2 verbundenen Ventilkolben 7 ausgebildeten zweiten Dichtsitz 8 sowie einem mit beiden Dichtsitzen 6,8 zusammenwirkenden, in dem Steuergehäuse 5 abgedichtet angeordneten, in einem Führungsteil 20 geführten Ventilkörper 9, der mittels einer sich am Führungsteil 20 abstützenden Ventilfeder 21 gegen die Ventilsitze 6,8 gedrückt wird. Die Arbeitskammer ist mit der Unterdruckkammer über einen seitlich im Steuergehäuse 5 verlaufenden Kanal 22 verbindbar.

Die Bremskraft wird über ein stirnseitig an einem Vorderteil 23 des Steuergehäuses 5 anliegendes gummielastisches Reaktionsglied 24 übertragen. Der Kraftfluß erfolgt weiter über die als Ausgangsglied 3 wirkende Druckstange mit dem Kopfflansch 25 auf einen Betätigungskolben eines nicht gezeichneten Hauptbremszylinders der Kraftfahrzeugbremsanlage, welcher vorzugsweise an der unterdruckseitigen Verstärkergehäusehälfte angebracht ist.

Eine in der Zeichnung nicht dargestellte Rückstellfeder, die sich an der unterdruckseitigen Stirnwand des Verstärkergehäuses abstützt, hält die bewegliche Wand in der Ausgangsstellung. Außerdem ist eine zweite Druckfeder bzw. Betätigungsstangenrückstellfeder 26 vorgesehen, die einerseits indirekt an der Betätigungsstange und andererseits am Führungsteil 20 abgestützt ist und deren Kraft für eine Vorspannung des Ventilkolbens 7 bzw. seines Dichtsitzes 8 gegenüber dem Ventilkörper 9 sorgt.

Um die Arbeitskammer bei der Betätigung des Steuerventils 4 mit der Atmosphäre verbinden zu können, ist schließlich im Steuergehäuse 5 ein annähernd radial verlaufender Kanal 27 ausgebildet. Die Rückkehrbewegung des Ventilkolbens 7 am Ende eines Bremsvorganges wird dabei durch ein Querglied 28 begrenzt, das sich, wie in der Figur dargestellt, im Abstand zu einem an dem Verstärkergehäuse ausgebildeten Anschlag 29 befindet.

Wie der Zeichnung weiter zu entnehmen ist, weist der Ventilkörper 9 eine mit den beiden Dichtsitzen 6,8 zusammenwirkende ringförmige Dichtfläche 30 auf, die mittels einer metallischen Versteifungsscheibe 31 versteift ist und mit mehreren axialen Durchlässen 32 versehen ist. Außerdem weist der Ventilkörper 9 eine radial innen ausgebildete Dichtlippe 33 sowie eine radial außen ausgebildete zweite Dichtlippe 34 auf, die im montierten Zustand des Ventilkörpers 9 im Steuergehäuse 5 an dem vorhin erwähnten, den Ventilkörper 9 führenden Führungsteil 20 dichtend anliegen, so daß im Steuergehäuse 5 ein pneumatischer Raum 35 begrenzt ist. Die durch die Durchlässe 32 und Öffnungen in der Dichtfläche 30 gebildeten, näher nicht bezeichneten Strömungskanäle verbinden den pneumatischen Raum 35 mit einem durch die Dichtsitze 6,8 begrenzten Ringraum 36, in den der oben erwähnte Kanal 27 mündet, so daß der auf der der Dichtfläche 30 abgewandten Seite des Ventilkörpers 9 ausgebildeten pneumatische Raum 35 ständig mit der Arbeitskammer in Verbindung steht und am Ventilkörper 9 ein Druckausgleich stattfindet.

Die beschriebene Anordnung ermöglicht demnach eine Verringerung der Differenz zwischen der Ansprechkraft der Bremskraftübersetzungsvorrichtung und der am Ventilkolben 7 wirkenden Rückstellkraft in dem Sinne, daß bei einer gleichbleibenden Ansprechkraft eine Erhöhung der Rückstellkraft oder bei einer gleichbleibenden Rückstellkraft eine Verringerung der Ansprechkraft möglich ist.

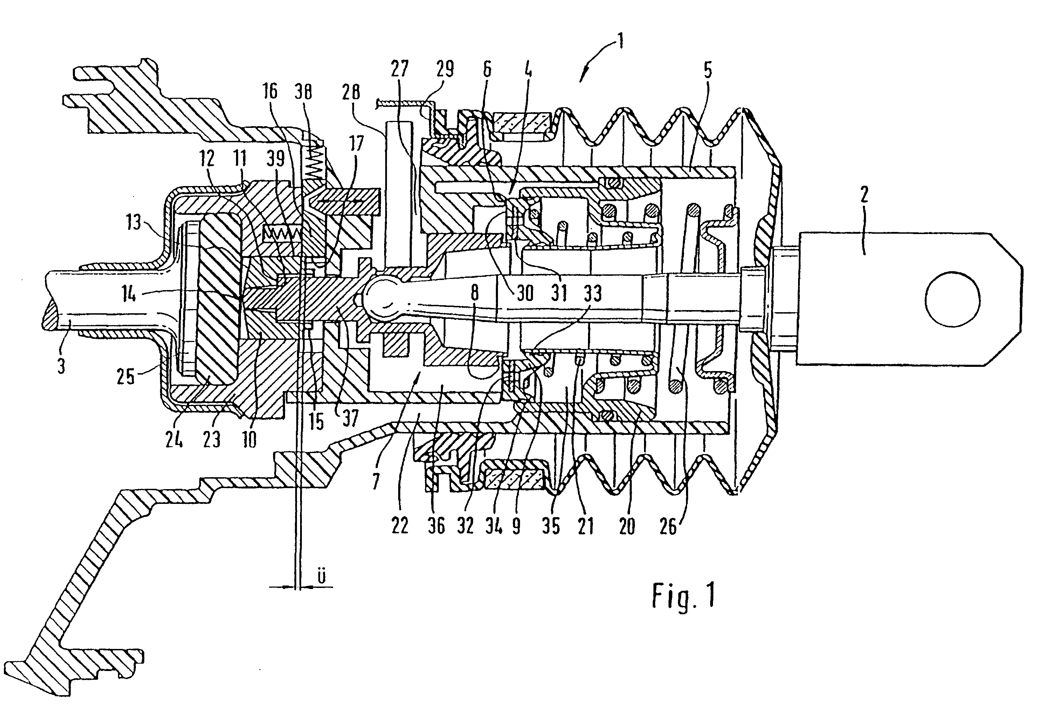

Wie Fig. 1 weiter eindeutig erkennen läßt, ist der Ventilkolben 7 an seinem reaktionsgliedseitigen Ende 37 zweiteilig ausgebildet und verfügt über ein axial relativ zu dem Ventilkolben 7 bewegbares Druckstück 10 in Form einer Buchse, welche zusammen mit dem Ventilkolben 7 in Richtung Reaktionsglied 24 bewegbar ist. Zu diesem Zweck ist der Ventilkolben 7 mit einer Schulter 11 zur Anlage an einer Stufe 12 des Druckstücks 10 versehen. Wie die Figur beispielsweise verdeutlicht, sind Schulter 11 und Stufe 12 derart ausgebildet, daß axial in Richtung Reaktionsglied 24 eine formschlüssige Mitnahme bzw. Abstützung des Druckstücks 10 an dem Ventilkolben 7 erfolgt. Eine Mitnahme des Druckstücks 10 durch den Ventilkolben 7 in die entgegengesetzte Richtung, also von dem Reaktionsglied 24 weg, ist nicht möglich. In der gezeichneten Normalbremsstellung beaufschlagt das Druckstück 10 das Reaktionsglied 24 mit ihrer Stirnseite 13 und zwar zusätzlich zu der reaktionsgliedseitigen Kontaktfläche 14 des Ventilkolbens 7. An dem, dem Reaktionsglied abgewandten Ende des Druckstücks 10 befindet sich eine nach radial außen weisende, ringförmig umlaufende Stufe 15 zum Eingriff eines Kupplungselementes 16. Bei dem Ausführungsbeispiel ist das Kupplungselement 16 als radial bewegbarer Schieber ausgebildet, welcher durch eine radial wirksame Druckfeder 38 radial in Richtung Druckstück 10 elastisch vorgespannt ist. Gemäß Fig. 1 dient das Kupplungselement 16 zugleich als Steuerorgan und besitzt an seinem druckstückseitigen Ende eine Steuerfläche 17, die zeichnungsgemäß auf dem radialen Umfang 39 des Druckstücks 10 aufliegt. Der Zeichnung ist ferner zu entnehmen, daß in der Normalbremsstellung eine Überdeckung ü vorliegt, mit der die Steuerfläche 17 am Umfang 39 aufliegt. Folglich ist die Relativbewegung zwischen dem Ventilkolben 7 und dem Steuergehäuse 5 nicht ausreichend, damit das Kupplungselement 16 in die Stufe 15 eingreift und es dadurch zu einer formschlüssigen Kraftübertragung zwischen Steuergehäuse 5 und Druckstück 10 kommt.

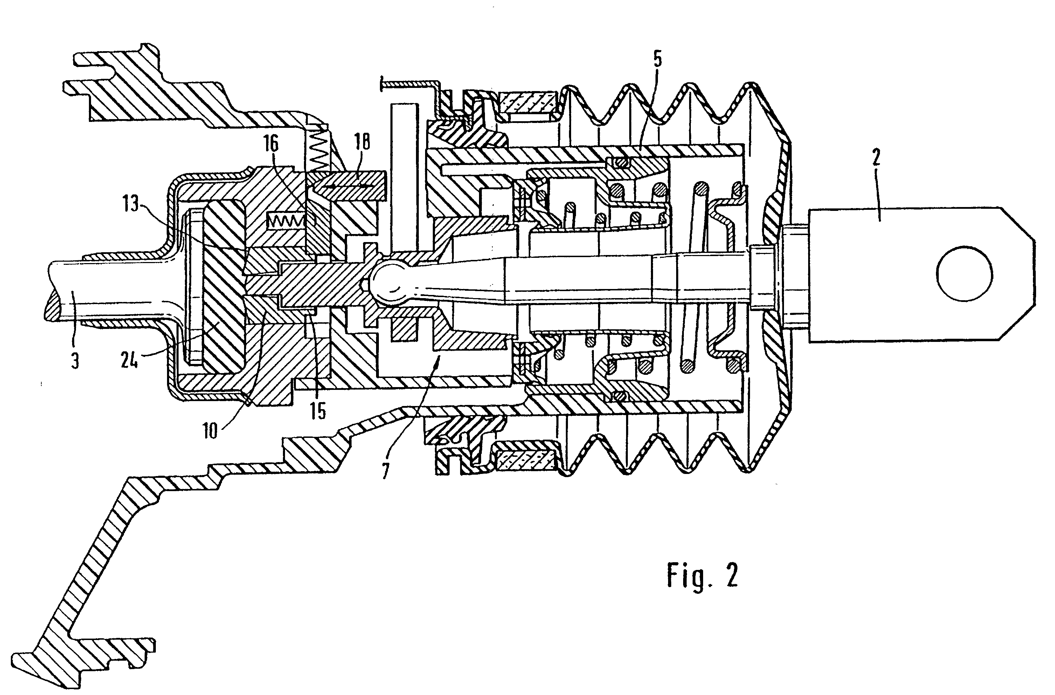

Bei der in Fig. 2 verdeutlichten Funktionsstellung wurde das Eingangsglied 2 zusammen mit dem Ventilkolben 7 derart schnell in Richtung Reaktionsglied 24 beschleunigt, daß es zu einer Relativbewegung zwischen dem Ventilkolben 7 und dem Steuergehäuse 5 kommt, bei der das Kupplungselement 16 formschlüssig in die Stufe 15 des Druckstücks 10 eingreift, so daß es zu der beschriebenen Kraftübertragung kommt. Durch diese Maßnahme wird es ermöglicht, daß eine Verstärkungskraft, welche vermittels der beweglichen Wand auf das Steuergehäuse einwirkt, über das Druckstück 10 und dessen Stirnseite 13 auf das Reaktionsglied 24 gelenkt wird. Folglich wirkt die gesamte Verstärkungskraft über das Druckstück 10 auf das Reaktionsglied 24. Der Lösevorgang der Kraftübertragung geschieht wie folgt. Zunächst wird das Eingangsglied 2 durch den Fahrer axial von dem Reaktionsglied 24 wegbewegt. Durch diese Maßnahme wird der zweite Dichtsitz 8 in Richtung Schließstellung bewegt und gleichzeitig der erste Dichtsitz 6 geöffnet, wodurch die Arbeitskammer mit der Vakuumkammer verbunden wird. Folglich entfällt die Druckdifferenz an der beweglichen Wand und das Steuergehäuse 4 wird infolge Federkraft in die unbetätigte Stellung verschoben. Infolge dessen entfällt an dem Kupplungselement 16 auch die von dem Steuergehäuse 5 aufgebrachte Axialkraft. Ferner wird das Löseglied 18 mit seiner Keilfläche außer Eingriff gebracht.

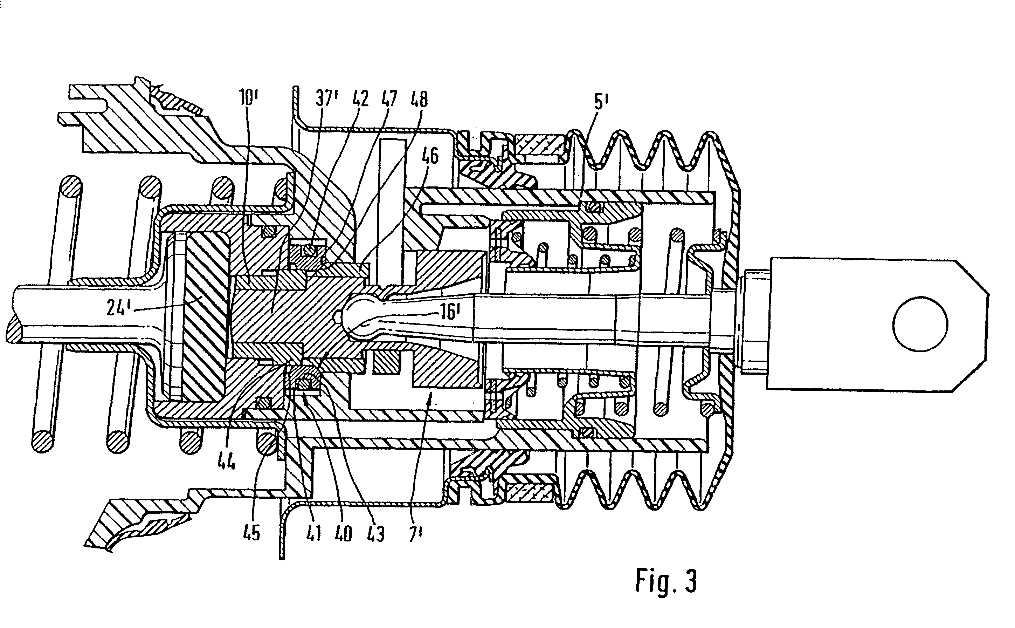

Der Aufbau und die Funktionsweise der Bremskraftübersetzungsvorrichtung gemäß Fig. 3 stimmt mit Ausnahme von Einzelheiten der Kupplungsvorrichtung mit den Fig. 1 und 2 überein. Entsprechend sind für übereinstimmende Bauteile die gleichen Bezugsziffern und zusätzlich ein Strich verwendet worden. Wie zu ersehen ist, handelt es sich bei dem Kupplungselement 40 um einen scheibenförmigen Körper, welcher in radialer Richtung dehnbar ausgebildet ist und zusätzlich unter der Wirkung eines einen Mantel 41 des Kupplungselementes 40 umgreifenden Federelementes 42 steht. Aufgrund der einwirkenden Federkraft steht das Kupplungselement 40 ständig in dem Bestreben, möglichst weit nach radial innen in Richtung Ventilkolben 7 zu gelangen, also einen möglichst geringen Umfang aufzuweisen. Wie die Figur beispielhaft zeigt, besitzt das Kupplungselement 40 eine Nut 43, in der sich das Federelement 42, welches in vorteilhafter Weise als Gummi- oder Kunststoffring ausgebildet ist, befindet. Wie bei dem Ausführungsbeispiel gemäß Fig. 1, ist das Druckstück 10' bewegbar auf dem vorderen Ende 37' des Ventilkolbens 7' angeordnet und verfügt an seinem, dem Reaktionsglied 24' abgewandten Ende über einen Bund 44. Schließlich verfügt das Kupplungselement 40 an seinem, dem Reaktionsglied 24' zugewandten Ende über eine radial umlaufende Nut 45 zum Angriff an dem Bund 44. Wie eindeutig zu ersehen ist, besteht in der gezeichneten Normalbremsstellung ausreichend Überdekkung zwischen einer Steuerfläche des Kupplungselementes 40 und dem Umfang des Kupplungselementes 40, so daß es zu keiner Kraftübertragung zwischen Kupplungselement 40 und Steuergehäuse 5' kommt. Aus der Figur ist ferner ein Löseglied 46 zu ersehen, welches ringförmig ist und in axialer Richtung bewegbar zwischen einem Durchbruch in dem Steuergehäuse und einer zylindrischen Außenfläche des Ventilkolbens 7 bewegbar geführt ist. An seinem reaktionsgliedseitigen Ende ist eine konische Austreibfläche 47 vorgesehen, welche in Kontakt steht mit einer ebenfalls konisch geformten Gegenfläche 48 an dem Kupplungselement 40. Der Verriegelungs- und Entriegelungsmechanismus wird nachstehend beschrieben.

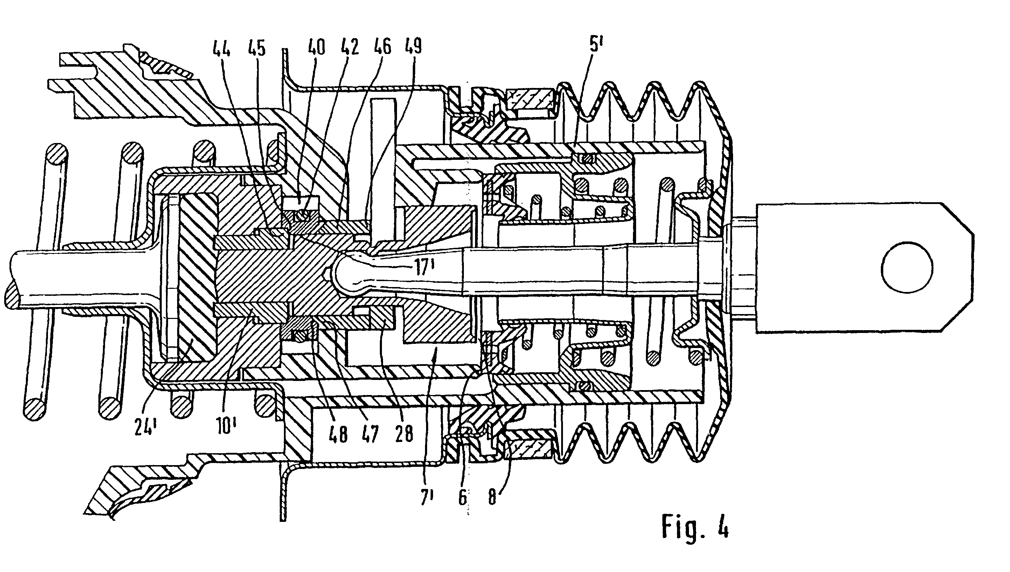

Wie Fig. 4 verdeutlicht, befindet sich die Bremskraftübersetzungsvorrichtung in einer Position, in der die maximale Verstärkungskraft über das Druckstück 10' auf das Reaktionsglied 24' übertragen wird. Die Figur läßt ferner erkennen, daß das Kupplungselement 40 mit seiner Nut 45 hinter den Bund 44 des Druckstücks 10 greift und auf diese Art und Weise eine Kraftübertragung von dem Steuergehäuse 5' über das Druckstück 10' auf das Reaktionsglied 24' gewährleistet. Dies wurde dadurch erreicht, daß das Eingangsglied 2' mit großer Geschwindigkeit niedergetreten wurde, so daß es zu einer Relativbewegung zwischen dem Ventilkolben 7' und dem Steuergehäuse 5' gekommen ist und infolge dessen die an der Steuerfläche 17' vorliegende Überdeckung aufgebraucht ist und es infolge der nach radial innen wirkenden Kraft der Feder 42 zu einem Einschnappen des Kupplungselementes 40 kommt. In dieser Stellung liegt das Löseglied 46 mit seinem Endstück 49 an dem Querglied 28 an und zwischen der Austreibfläche 47 und der zugeordneten Gegenfläche 48 befindet sich Spiel. Der Lösevorgang geschieht wie folgt. Das Eingangsglied 2 wird zurückgezogen, so daß die Pressung auf das Reaktionsglied 24' zurückgenommen wird und der erste Dichtsitz 6 zur Durchströmung freigegeben wird. Ferner wird der Dichtsitz 8 geschlossen, so daß die Arbeitskammer wie auch die Vakuumkammer evakuiert wird und an der beweglichen Wand die Druckdifferenz zum Erliegen kommt. Unter der Wirkung der zurücktreibenden Feder wird das Steuergehäuse 5' zurückgeschoben, bis das Löseglied 46 mit seinem Endstück 49 zur Anlage an dem Querglied 28 kommt und infolge dessen axial abgestützt ist. Gleichzeitig preßt das zurücktretende Steuergehäuse 5' das Kupplungselement 40 mit seiner Gegenfläche 48 auf die Austreibfläche 47 mit der Folge, daß das Kupplungselement 40 bestrebt ist, entlang der sich ihm darbietenden schiefen Ebene nach radial außen aufgedehnt zu werden, bis die Nut 45 den Bund 44 freigibt und infolge dessen die Kraftübertragung gelöst wird. Schließlich gleitet das Kupplungselement 40 mit seiner Steuerfläche 17' auf den Umfang des Druckstücks 10' und somit in seine Ruheposition.

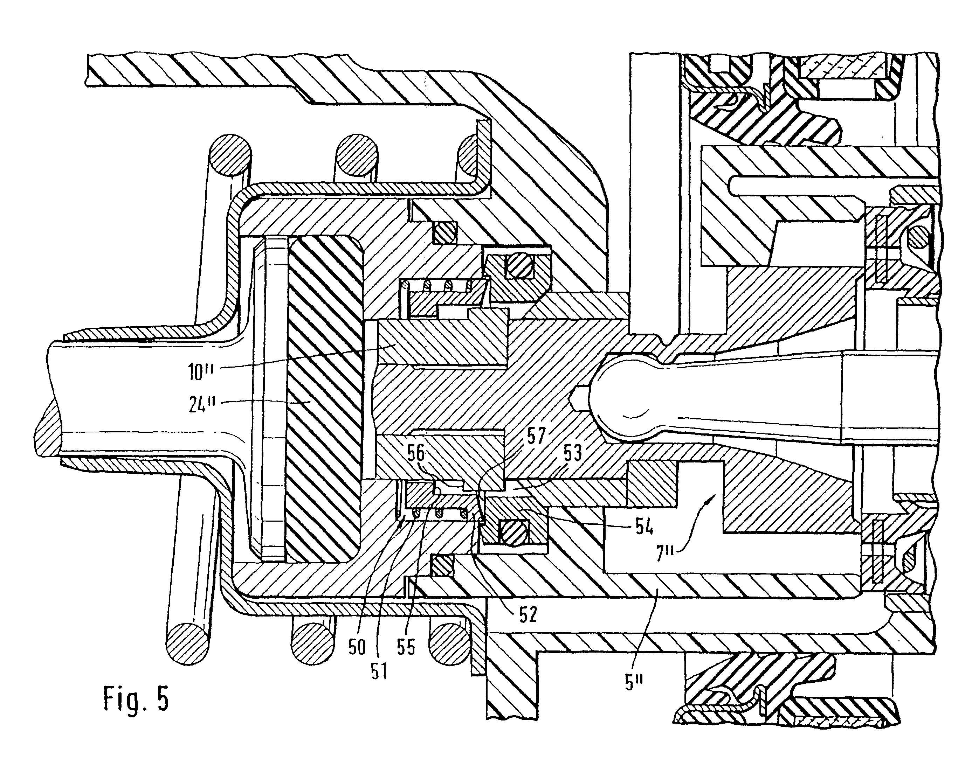

Das in Fig. 5 gezeigte dritte Ausführungsbeispiel unterscheidet sich von dem Ausführungsbeispiel gemäß Fig. 3 durch ein separates Steuerorgan 50. Wie die Figur zeigt, ist das Steuerorgan 50 ringförmig und radial am Umfang des Druckstücks 10" angeordnet. Es ist ferner mit einer Druckfeder 51 federnd vorgespannt und greift mit einem Vorsprung 52 in einen Kanal 53 für das Kupplungselement 54 ein. Folglich versperrt das Steuerorgan 50 mit seinem Vorsprung 52 den Weg des Kupplungselementes 54. Schließlich ist das Steuerorgan 50 mit einem Anschlag 55 versehen, an dem das Druckstück 10" mit seinem Ringbund 56 angreifen kann. Der Kupplungsvorgang geschieht wie folgt. Bei besonders schneller Betätigung des Eingangsglieds 2 bewegt sich der Ventilkolben 7" zusammen mit dem Druckstück 10" in Richtung Reaktionsglied 24" und deformiert dieses, bis es zur Anlage des Ringbunds 56 an dem Anschlag 55 des Steuerorgans 50 kommt und dieses entgegen der Kraft der Druckfeder 51 in Richtung Reaktionsglied 24 bewegt wird, so daß der Vorsprung 52 den Kanal 53 freigibt und das Kupplungselement 54 mit seiner Nut 57 hinter den Anschlag 55 schnappt und dadurch eine Kraftübertragung von dem Steuergehäuse 5" über das Kupplungselement 54 auf das Druckstück 10" und das Reaktionsglied 24" gewährleistet. Der Lösevorgang geschieht wie bei dem vorstehenden Ausführungsbeispiel beschrieben.

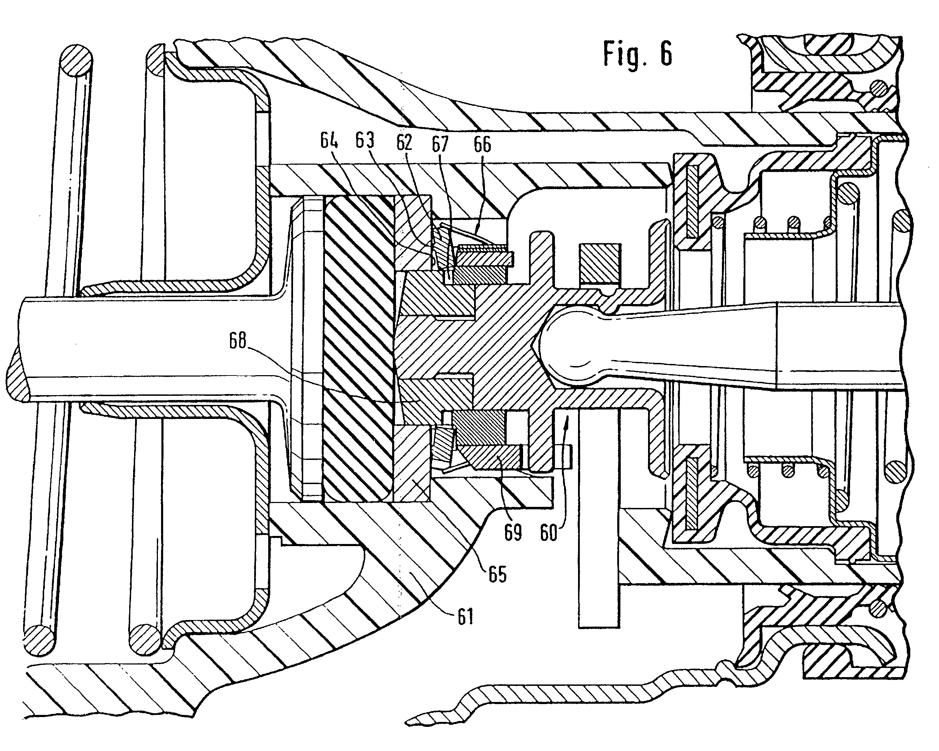

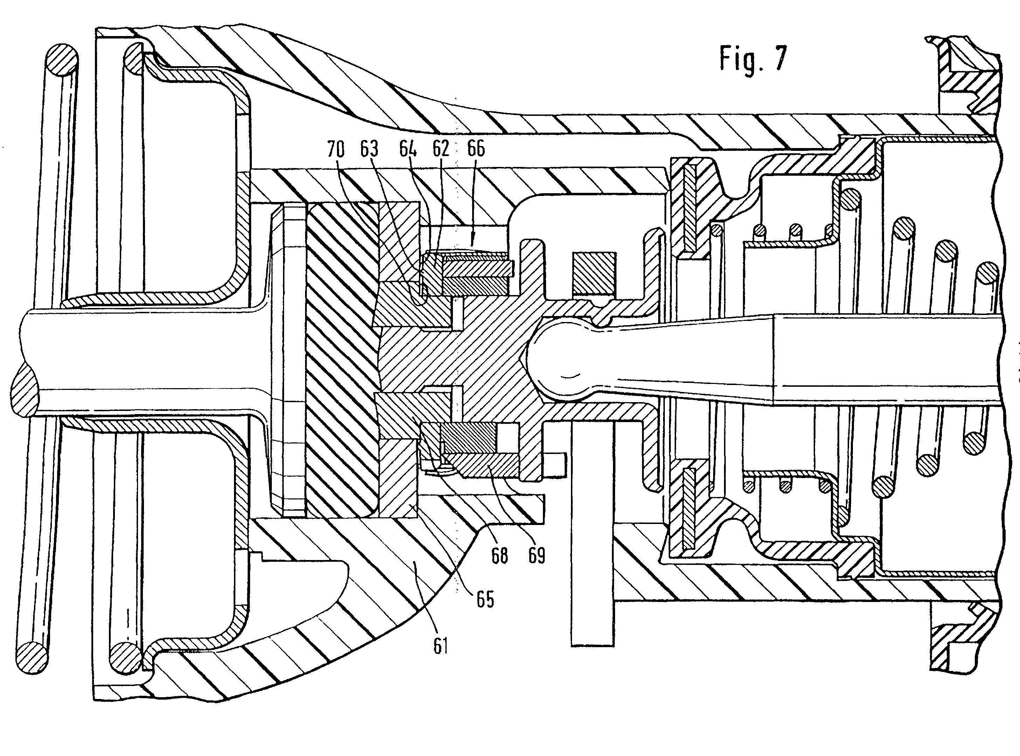

Das Ausführungsbeispiel gemäß den Figuren 6 und 7 beruht ebenfalls auf dem Prinzip, daß eine Relativbewegung zwischen dem Ventilkolben 60 und dem Steuergehäuse 61 als Kriterium für den Eingriff des Kupplungselementes 62 herangezogen wird. Das Kupplungselement 62 ist scheibenförmig und weist auf einer Seite einen Vorsprung 63 auf, mit dem es schwenkbar an eine Wand 64 eines, dem Steuergehäuse 61 zugeordneten Bauteil 65 anliegt. Ferner ist das Kupplungselement 62 mit einem elastischen Element 66, vorzugsweise einer Schenkelfeder in radialer Richtung elastisch vorgespannt, so daß es bei einem entsprechenden Zwischenraum zwischen dem Druckstück 68 und dem genannten Bauteil 65 für eine formschlüssige Mitnahme des Druckstücks 68 hinter einen Absatz 70 greifen kann. Infolge der radial wirksamen Federvorspannkraft gleitet das Kupplungselement 62 gleichsam in den Zwischenraum 67. Die Fig. 7 zeigt den Zustand in der Notbremsstellung. Im Rahmen der Rückzugbewegung des Ventilkolbens 60 dient ein keilförmiges Löseglied 69 dazu, das Kupplungselement 62 aus dem Zwischenraum 67 zu ziehen. Diese Ausführungsform besitzt den Vorteil, daß die einzelnen Bauteile sehr kostengünstig hergestellt und montiert werden können.

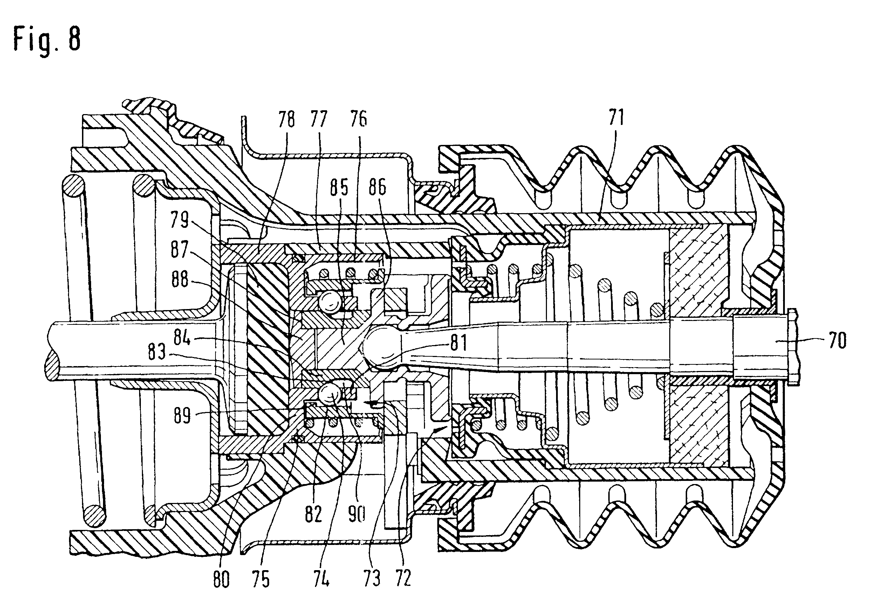

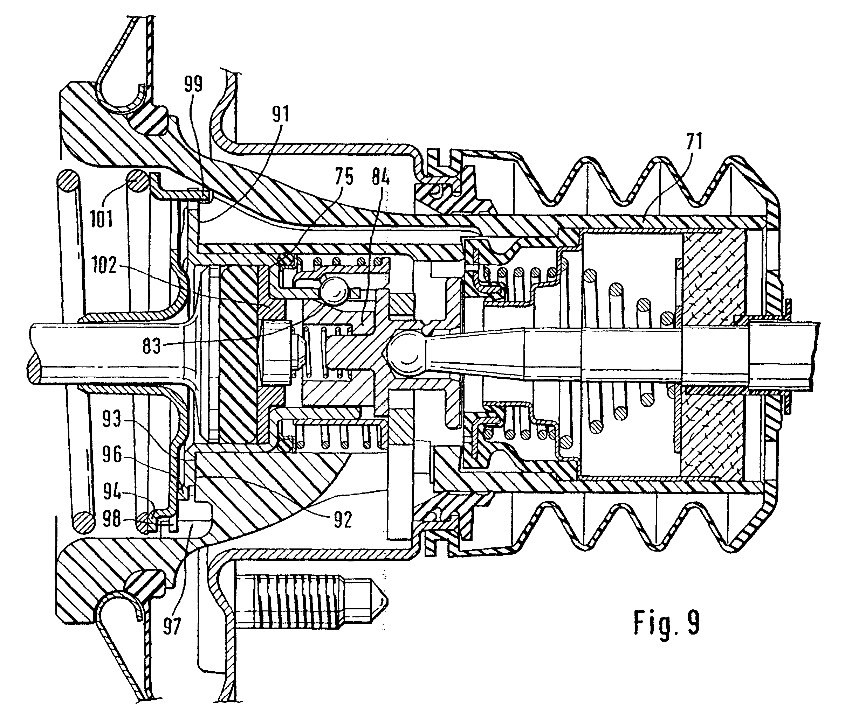

Die Ausführungsformen gemäß den Figuren 8 und 9 beruhen prinzipiell darauf, daß als Auslösekriterium für die Übersetzungsänderung (Vergrößerung der Verstärkung) eine Relativverschiebung zwischen Eingangsglied 70 und Steuergehäuse 71 herangezogen wird. Die Ventilanordnung 72 zur Ansteuerung der Bremskraftübersetzungsvorrichtung weist keine gravierenden Unterschiede zu den vorstehend beschriebenen Ausführungsformen auf, so daß auf die entsprechend übereinstimmende Beschreibung verzichtet wird. Das Kupplungselement 73 ist bei den in Rede stehenden beiden Ausführungsformen im wesentlichen aus einer oder mehreren Wälzkörpern 74 gebildet, welche in einem Halte- oder Führungskorb 75 in axialer Richtung festgehalten, aber in radialer Richtung grundsätzlich bewegbar angeordnet ist. Der Haltekorb 75 ist an dem Steuergehäuse 71 angelegt oder befestigt und besteht vorzugsweise aus Blechwerkstoff, welcher durch Stanzoperationen und umformtechnischer Maßnahmen in eine abgestuft hülsenförmige Korbform vergleichbar einem Wälzlagerring gebracht wird. Gemäß der Ausführungsform nach Fig. 8 besteht der Haltekorb 75 gewissermaßen aus einem rohrabschnitt, dessen eingangsgliedseitiger Stutzen 76 axial in einen konzentrischen radial äußeren Stutzen 77 des Steuergehäuses 71 abgedichtet eingeschoben ist, so daß eine zuverlässige Zentrierung relativ zu dem Steuergehäuse 71 vorliegt. Mit einem in Richtung Ausgangsglied weisenden zweiten Stutzen 78 übergreift der Haltekorb 75 das gummielastische Reaktionsglied 79, so daß in diesem bei der Betätigung quasi hydrostatisch vorliegende Kräfte in radialer Richtung durch den Haltekorb 75 abgetragen werden. Mit anderen Worten wird gegenüber bekannten Vorrichtung das üblicherweise aus Kunststoff bestehende Steuergehäuse 71 nicht zur Kapselung des Reaktionsglieds 79 herangezogen. Folglich ist die Dauerhaltbarkeit stark verbessert, weil in diesem Bereich geringere Spannungen im Steuergehäuse 71 vorliegen.

Ferner verfügt der Haltekorb 75 über einen nach radial innen weisenden Boden 80, welcher eine Passage für das Druckstück 88 freiläßt und einen in Richtung Eingangsglied 70 abgekröpften Hals 81 aufweist. Im Hals 81 befindet sich der erwähnte, in ein Loch eingelegte Wälzkörper 74, beispielsweise nach Art einer Kugel. Der Hals 81 läßt folglich nur eine Bewegung des Wälzkörpers 74 in radialer Richtung zu. Nach radial außen begrenzt ein federvorgespannter Anschlag 82 oder Ring die Bewegbarkeit des wälzkörpers 74 derart, daß er nicht aus der axialen Begrenzung des Halses 81 rutschen kann. Radial innen bezogen auf den Wälzkörper 74 ist eine Steuerkontur 83, vorzugsweise mit Rampenform vorgesehen, welche sich am Umfang einer Hülse 84 befindet, die den am Eingangsglied 70 befestigten Ventilkolben 85 konzentrisch umgreift. Die Rampenform mit einer Schräge bewirkt einen linearen Zusammenhang zwischen axialer Verschiebung der Hülse relativ zu dem Steuergehäuse und der bewirkten radialen Verschiebung des Wälzkörpers und ist einfach herstellbar. Für anderer Anforderungen, insbesondere besonders schnelle Kupplung bei geringem axialen Verschiebeweg sind allerdings Kurvenformen, beispielsweise Parabelform denkbar. Die Hülse 84 ist relativ zu dem Ventilkolben 85 bewegbar, und das vordere Ende des Ventilkolbens 85 greift mit einem Zapfen derart in die Hülse 84 ein, so daß diese gewissermaßen auf dem Zapfen geführt ist. Bei Betätigung legt sich die Hülse 84 axial an einen Kragen 86 des Ventilkolbens 85 an. Andererseits kommt eine Stirnfläche 87 der Hülse 84 zur Anlage an dem Druckstück 88, so daß unter Zwischenschaltung der Hülse 84 die Betätigungskraft auf das Druckstück 88 übertragen werden kann. Im gleichen Maße kommt es zu einer unmittelbaren Weitergabe der Gegenkraft an die Betätigungsperson des Bremssystems. In diesem Zustand kommt dem Wälzkörper 74, der an der Steuerkontur 83 anliegt (noch) keine Funktion zu, und das Druckstück 88 ist über die Hülse 84 am Ventilkolben 85 (Eingangsglied 70) abgestützt. Dieser Zustand bleibt auch bei einer langsamen Betätigung des Bremssystems erhalten, wobei keine oder nur geringe Relativverschiebungen zwischen Eingangsglied 70 und dem am Steuergehäuse 71 festgelegten Haltekorb 75 vorliegen.

Eine sehr schnelle Betätigung des Eingangsglieds 70 mit entsprechender Relativverschiebung zwischen Eingangsglied 70 und Steuergehäuse 71, respektive Haltekorb 75 führt zu einer Verschiebung der Hülse 84 mitsamt Steuerkontur 83 in Richtung Reaktionsglied 79. Infolgedessen gleitet der Wälzkörper 74 an einem Vorsprung 89 einer federvorgespannten Hülse 82 derart ab, daß er von seiner radial äußeren Ausgangsstellung (auf der Steuerfläche) in eine radial innere Betätigungsstellung geschoben wird, welche sich beispielsweise innerhalb einer Nut 90 am Fuße der Rampe befindet. Weil nun der Wälzkörper 74 einerseits in dem Hals 81 axial festgelegt ist, und andererseits formschlüssig an der Steuerkontur 83 der Hülse 84 angreift, ist das Kupplungselement 73 eingekuppelt. Die Rückwirkungskraft des Bremssystems wird gewissermaßen über das Druckstück 88, die Hülse 84, den Wälzkörper 74 sowie dem Haltekorb 75 an dem Steuergehäuse 71 aufgenommen, ohne daß es zwangsläufig zu einer Rückwirkung dieser Bremsreaktionskraft auf den Fahrer kommt. Infolgedessen wird der Fahrer kraftmäßig Entkoppelt, mit anderen Worten von der Rückwirkung größerer Kräfte abgetrennt. Der Fahrer kann nun das Steuerventil 72 frei und unabhängig von großen Fußkräften (Reaktionskräften) regeln, so daß entsprechend der eingesteuerten Belüftung der entsprechende Radbremsdruck eingesteuert werden kann. Die Bremskraftübersetzungsvorrichtung weist folglich eine gesonderte Kennlinie für den Notbremsbetrieb auf, die es dem Fahrer nach der Aktivierung erlaubt, die Bremskräfte rund um den Aktivierungspunkt frei und von starker Rückwirkung befreit zu regeln. Die Erfindung bildet folglich den funktionalen Zusammenhang eines sogenannten elektronischen Bremsassistenten mit rein mechanischen Mitteln nach, wobei allerdings der Vorteil gegeben ist, daß im Unterschied zu elektrischen Systemen keine Fehlauslösungen durch mangelhafte Kontakte oder Schalter auftreten können. Die Vorrichtung ist folglich äußerst robust und ferner wesentlich kostengünstiger, weil keine elektomechanisch wirksamen Bauteile erforderlich sind.

Der Auskuppelvorgang geschieht durch Zurücknehmen des Eingangsglieds 70, so daß das Steuerventil 72 geschlossen und die eingesteuerte Verstärkungskraft zurückgenommen wird. Die Vorrichtung bleibt allerdings noch immer eingekuppelt. Der Auskuppelvorgang beginnt erst, wenn der Ventilkolben derart weit zurückgenommen wird, daß er mit dem Kragen 86 an einem quer durch das Steuergehäuse 71 gesteckten Keil anschlägt, zu dem der Ventilkolben grundsätzlich sowie begrenzt frei bewegbar ist. Nach der Anlage des Kragens 86 an dem Keil, wird dieser bei fortgesetzter Rückzugsbewegung in Richtung eines Anschlags am Verstärkergehäuse mitgenommen und liegt schließlich an diesem an, so daß die Rückführbewegung begrenzt ist. Weil einerseits die Vorspannung des Anschlagrings 82 erschöpft ist (der Vorsprung drängt den Wälzkörper nicht mehr in die radial innere Kupplungsstellung) und andererseits die zusammen mit dem Ventilkolben 85 zurückstrebende Steuerkontur 83 den Wälzkörper 74 nach radial außen drückt, strebt der Wälzkörper 74 nach radial außen in die entkuppelte Ausgangsstellung. Damit ist der Kupplungszustand aufgehoben, kann jedoch grundsätzlich jederzeit wiederholt werden.

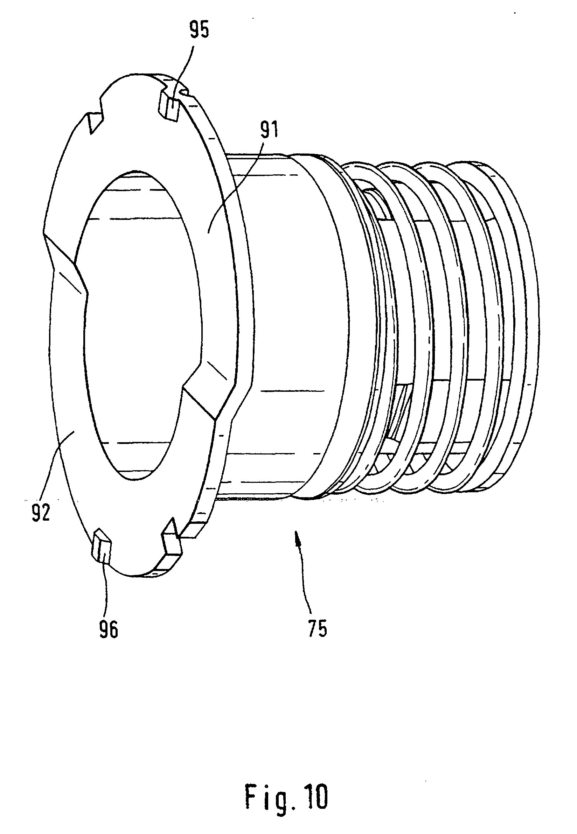

Das Ausführungsbeispiel gemäß Figur 9 beruht grundsätzlich auf demselben Prinzip verfügt jedoch über zusätzliche Verbesserungen. Weil generell der Wunsch besteht, den Aktivierungspunkt das heißt die für die Aktivierung des Systems notwendige Relativverschiebung an den Fahrer anpassbar zu gestalten, weist der Haltekorb 75 zur Anlage an dem Steuergehäuse 71 zwei diametral zueinander vorgesehene Anlageflächen auf 91,92 auf, welche schraubenartig (sowie zweigängig) im Raum angestellt vorgesehen sind. Das Steuergehäuse 71 besitzt an seiner anliegenden Stirnseite 93 zwei zugeordnete, ebenfalls diametral vorgesehene Schraubengangartige Flächen, so daß durch eine Verdrehung des Haltekorbs 75 relativ zu dem Steuergehäuse 71 eine entsprechende axiale Verschiebung der Steuerkontur 83 herbeigeführt werden kann. Fig. 10 zeigt den Haltekorb 75 mit einem Federelement zur vorspannung des Anschlag 82 in räumlicher Ansicht mit den räumlich schräg angestellen Flächen 91,92. Für eine ebene und sichere Anlage eines Federtellers 94 an dem Haltekorb 75 sind axial vorragende Stützen 95,96 vorgesehen, welche für einen Niveauausgleich bezüglich der beiden schraubengangartig angestellten Flächen 91,92 sorgen. Für die Sicherung der gefundenen Einstellung gegen unbeabsichtigtes Lösen, insbesondere unerwünschte Verdrehung, weist das Steuergehäuse 71 mindestens eine Rastnase 97 auf, welche zahn- oder nockenförmig nach radial innen in Richtung Haltekorb 75 weist. Für eine formschlüssige Sicherung greift jede Rastnase 97 an einem Arm 98 an oder in eine Ausnehmung des Federtellers 94 ein, welcher seinerseits formschlüssig mit einem Arm 99 in eine Ausnehmung des Haltekorbs 75 eingreift. Die Einstellung kann einfach dadurch bewirkt werden, daß der Federteller 94 gegen die Kraft der Gerätefeder 101 abgehoben und um seine Achse verdreht wird, bis die gewünschte Axialverstellung erreicht ist. Daraufhin wird der Federteller 94 abgesenkt, so daß die beschriebene formschlüssige Sperre eintritt. Es ist zu berücksichtigen, daß es in gleichwirkender Art und Weise vorgesehen sein kann, daß jede Rastnase 97 unmittelbar in umfangsseitige Ausnehmungen des Haltekorbs 75 eingreifen können, ohne den Erfindungsgedanken zu verlassen. Die vorstehend beschreibene Einstellung wird bei der Herstellung der Übersetzungsvorrichtung noch vor der unlösbaren Befestigung von zwei Gehäusehalbschalen aneinander durchgeführt. Es sind allerdings auch am geschlossenen Gehäuse angeordnete Manipulatoren denkbar, mit denen die Auslöseschwelle (Aktivierungspunkt) nachträglich auf generell gleiche Art und Weise beispielsweise von dem Fahrzeugführer selbst für die eigenen Bedürfnisse eingestellt werden kann.

Eine Einstellmöglichkeit zur Beeinflussung der Verstärkungskennlinie (Verhältnis zwischen aufgewendeter Eingangskraft d. h. Fußkraft und Ausgangskraft) ist ohne konstruktive Umgestaltung und ohne aufwendige Produktionsänderung gemäß Fig. 9 dadurch bereitgestellt, daß in das innere des Haltekorbs 75 ein Austauschstück 102 mit einer definiert großen Anlagefläche an dem Reaktionsglied 79 eingelegt werden kann. Das Austauschstück 102 kann gegen andere Austauschstücke mit einer anderen Anlagefläche ausgetauscht werden.

Wie bereits kurz beschrieben, können Ausführungen für sehr harten Einsatz (mit besonders hohen Kräften) mehrere im regelmäßigen Winkel zueinander angeordnete Wälzkörper 74 aufweisen. Um die Dauerfestigkeit, insbesondere der Hülse 84 mit Steuerkontur 83 zu verlängern ist es für alle Ausführungsformen mit Wälzkörpern 74 vorteilhaft, die Steuerkontur 83 hinsichtlich Ihrer räumlichen Ausdehnung an den Wälzkörper 74 anzupassen, damit möglichst keine überhöhte Hertz sche Pressung (punktartig) mit überhöhter Beanspruchung auftritt. In diesem Zusammenhang ist eine angenäherte Linienberührung besonders vorteilhaft, welche bei Kugeln als wälzkörper dadurch erzeugt werden kann, daß die rampenförmige Steuerkontur eine kanalartige, an den Radius der Kugel angenäherte räumliche Gestaltung erhält. Dieselbe Schmiegung wie sie vorstehend genannt wurde ist auch für den Anschlag 82 im Bereich seiner Anlage an dem Wälzkörper 74 sinnvoll, weil auch dort stark überhöhte und flächig sehr begrenzte Pressungen auftreten können. Im übrigen versteht es sich, die genannten hochbeanspruchten Bauteile 82,84 aus hochfestem Werkstoff, beispielsweise Kugellagerstahl auszuführen, um den Verschleiß zusätzlich zu minimieren.

## Patentansprüche

1. Bremskraftübersetzungsvorrichtung, insbesondere für Kraftfahrzeuge mit einem betätigbaren Eingangsglied (2) umfassend einen Ventilkolben (7), einem Ausgangsglied (3) zur Beaufschlagung insbesondere eines Hauptbremszylinders mit einer Verstärkungskraft und mit einem in einem Steuergehäuse (5,5',5") angeordneten Steuerventil zur Regelung der Verstärkungskraft, wobei im Bereich eines Reaktionsglieds (24) ein axial bewegbares Druckstück (10,10',10") vorgesehen ist, welches sich an dem Eingangsglied (2) oder dem Steuergehäuse (5,5',5") abstützt und dadurch eine Änderung des Kraftübersetzungsverhältnis ermöglicht, **dadurch gekennzeichnet, daß** das Druckstück (10/10',10") für eine Vergrößerung der Verstärkung in Abhängigkeit von einer Relativbewegung zwischen dem Eingangsglied (2) und dem Steuergehäuse (5,5',5") mittels einem Kupplungselement (16,40,54) mit dem Steuergehäuse (5,5',5") lösbar verbindbar ist.

2. Bremskraftübersetzungsvorrichtung nach Anspruch 1, **dadurch gekennzeichnet, daß** dem Druckstück (10,10',10") ein an einem Steuergehäuse (5,5',5") angelegtes Kupplungselement (16,40,54) zugeordnet ist, welches formschlüssig sowie lösbar an dem Druckstück (10,10',10") angreift.

3. Bremskraftübersetzungsvorrichtung nach einem oder mehreren der vorhergehenden Ansprüche, **dadurch gekennzeichnet, daß** das Druckstück (10,10',10") an einer Umfangsfläche des Ventilkolbens (7) axial bewegbar geführt ist.

4. Bremskraftübersetzungsvorrichtung nach einem oder mehreren der vorhergehenden Ansprüche, **dadurch gekennzeichnet, daß** das Kupplungselement (16,40,54) eine Steuerfläche (17) aufweist, welche Steuerfläche (17) in Abhängigkeit von dem Vorschub des Ventilkolbens (7) eine erste und eine zweite Schaltstellung einnehmen kann und daß in der zweiten Schaltstellung das Kupplungselement (16) an dem Druckstück (10) angreift.

5. Bremskraftübersetzungsvorrichtung nach einem oder mehreren der vorhergehenden Ansprüche, **dadurch gekennzeichnet, daß** das Kupplungselement (16,40,54) in radialer Richtung bewegbar angeordnet ist und mit mindestens einer Anlagefläche an dem Druckstück (10,10',10") anlegbar ist.

6. Bremskraftübersetzungsvorrichtung nach einem oder mehreren der vorhergehenden Ansprüche, **dadurch gekennzeichnet, daß** das Kupplungselement (40,54) in radialer Richtung nachgiebig ausgebildet ist.

7. Bremskraftübersetzungsvorrichtung nach einem oder mehreren der vorhergehenden Ansprüche, **dadurch gekenn** **zeichnet, daß** das Kupplungselement (40,54) nach radial innen vorgespannt ist.

8. Bremskraftübersetzungsvorrichtung nach einem oder mehreren der vorhergehenden Ansprüche, **dadurch gekennzeichnet, daß** ein Löseglied vorgesehen ist, welches mit dem Kupplungselement zusammenwirkt.

9. Bremskraftübersetzungsvorrichtung nach Anspruch 8, **dadurch gekennzeichnet, daß** das Löseglied mittelbar oder unmittelbar an einen Endanschlag eines Verstärkergehäuse anlegbar ist.

10. Bremskraftübersetzungsvorrichtung nach Anspruch 8 oder 9, **dadurch gekennzeichnet, daß** das Löseglied an ein Querglied anlegbar ist, welches an den Endanschlag des Verstärkergehäuse anlegbar ist.

11. Bremskraftübersetzungsvorrichtung nach einem oder mehreren der Ansprüche 8-10, **dadurch gekennzeichnet, daß** das Kupplungselement (16,40,54) mindestens einen zu einer Hauptachse geneigten Keilabschnitt aufweist, welcher zur Anlage an einer Austreibfläche des Löseglieds (18,46) vorgesehen ist.

12. Bremskraftübersetzungsvorrichtung nach einem oder mehreren der vorhergehenden Ansprüche, **dadurch gekennzeichnet, daß** ein separates Steuerorgan (50) vorgesehen ist und einen Vorsprung (52) aufweist, welcher Vorsprung (52) in einer ersten Schaltstellung des Steuerorgans (50) in einen Kanal (53) für das Kupplungselement (54) eingreift und in einer zweiten Schaltstellung den Kanal (53) für das Kupplungselement (54) freigibt.

13. Bremskraftübersetzungsvorrichtung nach einem oder mehreren der vorhergehenden Ansprüche, **dadurch gekennzeichnet, daß** das Kupplungselement (73) für die formschlüssige Kupplung wenigstens einen Wälzkörper (74) aufweist.

14. Bremskraftübersetzungsvorrichtung nach Anspruch 13, **dadurch gekennzeichnet, daß** der Wälzkörper (74) in axialer Richtung fest in einem Haltekorb (75) angeordnet ist, und daß der Wälzkörper (74) in radialer Richtung in zwei Endstellungen bewegbar ist.

15. Bremskraftübersetzungsvorrichtung nach Anspruch 14, **dadurch gekennzeichnet, daß** radial versetzt zu dem Wälzkörper (73) eine Steuerkontur (83) vorgesehen ist, und daß eine axiale Verschiebung der Steuerkontur (83) zu einer radialen Verschiebung des Wälzkörpers (74) in eine der beiden Endstellungen bewirkt.

16. Bremskraftübersetzungsvorrichtung nach wenigstens einem der Ansprüche 13 bis 15, **dadurch gekennzeichnet, daß** das Druckstück (88) bei der ersten Endstellung des Wälzkörpers (74) an einem Ventilkolben (85) abgestützt ist, und daß der Wälzkörper (74) mit einer Verschiebung der Steuerkontur (83) relativ zu dem Steuergehäuse (71) derart in die andere Endstellung bewegbar ist, daß das Druckstück (88) in axialer Richtung mittelbar mit Hilfe des Wälzkörpers (74) und des Haltekorbs (75) an dem Steuergehäuse (71) abgestützt ist.

17. Bremskraftübersetzungsvorrichtung nach wenigstens einem der Ansprüche 13 bis 16, **dadurch gekennzeichnet, daß** die Steuerkontur (83) am Umfang einer Hülse (84) vorgesehen ist, und daß die Hülse (84) den Ventilkolben (85) konzentrisch umgreift.

18. Bremskraftübersetzungsvorrichtung nach Anspruch 17, **dadurch gekennzeichnet, daß** die Steuerkontur (83) Rampenform mit einer Schräge aufweist.

19. Bremskraftübersetzungsvorrichtung nach Anspruch 18, **dadurch gekennzeichnet, daß** die Steuerkontur (83) an den Wälzkörper (74) angepaßt ist, und sich zumindest teilweise an diesen anschmiegt.

20. Bremskraftübersetzungsvorrichtung nach zumindest einem der Ansprüche 13 bis 19, **dadurch gekennzeichnet, daß** als Wälzkörper (74) eine Kugel vorgesehen ist.

21. Bremskraftübersetzungsvorrichtung nach zumindest einem der Ansprüche 13 bis 20, **dadurch gekennzeichnet, daß** der Haltekorb (75) rohrförmig ist und einen ersten eingangssgliedseitigen Stutzen (76) und einen zweiten ausgangsgliedseitigen Stutzen (78) aufweist, wobei zwischen den beiden Stutzen (76, 78) ein nach radial innen weisender Boden (80) vorgesehen ist.

22. Bremskraftübersetzungsvorrichtung nach wenigstens einem der Ansprüche 13 bis 21, **dadurch gekennzeichnet, daß** der zweite Stutzen (78) das Reaktionsglied (79) axial übergreift.

23. Bremskraftübersetzungsvorrichtung nach wenigstens einem der Ansprüche 13 bis 22, **dadurch gekennzeichnet, daß** an dem Boden (80) des Haltekorbs ein axial abgekröpfter Hals (81) mit wenigstens einer Ausnehmung für wenigstens einen Wälzkörper (74) vorgesehen ist.

24. Bremskraftübersetzungsvorrichtung nach wenigstens einem der Ansprüche 13 bis 23, **dadurch gekennzeichnet, daß** der Haltekorb (75) zwei schraubenartig im Raum schräg angestellte Flächen (91,92) zur Anlage an zugeordneten schraubenartigen Flächen an einer Stirnseite (93) des Steuergehäuses (71) aufweist.

25. Bremskraftübersetzungsvorrichtung nach Anspruch 24, **dadurch gekennzeichnet, daß** das Steuergehäuse (71) wenigstens eine formschlüssig wirksame Rastnase (97) zum Eingriff in den Haltekorb (75) oder zum Angriff an einem Federteller (94) aufweist.

26. Bremskraftübersetzungsvorrichtung nach einem oder mehreren der Ansprüche 14-25, **dadurch gekennzeichnet, daß** für eine Beeinflussung der Verstärkungskennlinie wenigstens ein Austauschstück (102) in das Innere des Haltekorbs (75) einlegbar ist.

## Claims

1. Brake power transmission device, especially for motor vehicles with an actuatable input member (2), comprised of a valve piston (7), an output member (3) to exert a boosting force, especially on a master brake cylinder, and a control valve arranged in a control housing (5,5',5") to regulate the boosting force, wherein an axially moveable pressure piece (10, 10', 10") is provided in the area of a reaction member (24) and is supported on the input member (2) or the control housing (5, 5', 5") thereby enabling changes to be made in the power transmission ratio, **characterized in that** the pressure piece (10, 10', 10", 88) can be connected in a detachable manner to the control housing (5,5',5'') by means of a coupling element (16, 40, 54) in order to increase the boosting in dependence on a relative movement between the input member (2, 70) and the control housing (5, 5', 5", 71).

2. Brake power transmission device according to claim 1, **characterized in that** a coupling element (16,40,54) abutting on a control housing (5,5',5") is assigned to the pressure piece (10,10',10"), said coupling element making catch at the pressure piece (10,10',10") in a form-locking and detachable manner.

3. Brake power transmission device according to any one or several of the preceding claims **characterized in that** the pressure piece (10,10',10") is guided in an axially moveable manner on a circumferential surface of the valve piston (7).

4. Brake power transmission device according to any one or several of the preceding claims, **characterized in that** the coupling element (16,40,54) includes a control surface (17) which in dependence on the advance movement of the valve piston (7) can adopt a first or a second operating position, and **in that** such coupling element (16) makes catch at the pressure piece (10) in the second operating position.

5. Brake power transmission device according to any one or several of the preceding claims, **characterized in that** the coupling element (16,40,54) is arranged in a radially displaceable manner and can abut on the pressure piece (10,10',10") with at least one abutment surface.

6. Brake power transmission device according to any one or several of the preceding claims, **characterized in that** the coupling element (40,54) is flexible in radial direction.

7. Brake power transmission device according to any one or several of the preceding claims, **characterized in that** the coupling element (40,54) is pretensioned radially to the inside.

8. Brake power transmission device according to any one or several of the preceding claims, **characterized in that** a release member is foreseen which interacts with the coupling element.

9. Brake power transmission device according to claim 8, **characterized in that** the release member can be supported directly or indirectly on a limit stop of a booster housing.

10. Brake power transmission device according to claim 8 or 9, **characterized in that** the release member can be abutted on a transverse element which itself can be abutted on the limit stop of the booster housing.

11. Brake power transmission device according to any one or several of claims 8 to 10, **characterized in that** the coupling element (16,40,54) includes at least one wedge portion inclined towards a main axis which is provided for abutting on an expulsion surface of the release element (18,46).

12. Brake power transmission device according to any one or several of the preceding claims, **characterized in that** a separate control unit (50) is foreseen including a projection (52), which projection (52) engages into a channel (53) for the coupling element (54) in a first operating position of the control unit (50) and releases the channel (53) for the coupling element (54) in a second operating position.

13. Brake power transmission device according to any one or several of the preceding claims, **characterized in that** a coupling element (73) includes at least one rolling body (74) for the form-locking coupling.

14. Brake power transmission device according to claim 13, **characterized in that** the rolling body (74) in an axial direction is arranged in a fixed manner in a retaining cage (75), and **in that** the rolling body (74) can be moved to adopt two final positions in a radial direction.

15. Brake power transmission device according to claim 14, **characterized in that** a control contour (83) is foreseen being radially offset to the rolling body (73), and **in that** an axial displacement of the control contour (83) leads to a radial displacement of the rolling body (74) into one of the two final positions.

16. Brake power transmission device according to at least one of the claims 13 to 15, **characterized in that** the pressure piece (88) abuts on a valve piston (85) in the first final position of the rolling body (74), and **in that** the rolling body (74) by displacing the controlling contour (83) relative to the control housing (71) can be moved into the other final position in such a way that the pressure piece (88) is supported on the control housing (71) in an axial direction directly by means of the rolling body (74) and the retaining cage (75).

17. Brake power transmission device according to at least one of the claims 13 to 16, **characterized in that** the control contour (83) is provided on the circumference of a sleeve (84), and **in that** the sleeve (84) embraces the valve piston (85) concentrically.

18. Brake power transmission device according to claim 17, **characterized in that** the control contour (83) has a ramp-like form with an inclination.

19. Brake power transmission device according to claim 18, **characterized in that** the control contour (83) is adapted to the rolling body (74) conforming at least in part to it.

20. Brake power transmission device according to at least one of the claims 13 to 19, **characterized in that** a ball is used as rolling body (74).

21. Brake power transmission device according to at least one of the claims 13 to 20, **characterized in that** the retaining cage (75) has a tubular design and includes a first connection piece (76) adjacent to the input member and a second connection piece (78) adjacent to the output member, wherein a bottom (80) which extends radially to the inside is provided between the two connection pieces (76,78).

22. Brake power transmission device according to at least one of the claims 13 to 21, **characterized in that** the second connection piece (78) axially overlaps the reaction member (79).

23. Brake power transmission device according to at least one of the claims 13 to 22, **characterized in that** the bottom (80) of the retaining cage is provided with a collar (81), axially bent at right angles, with at least one recess for at least one rolling body (74).

24. Brake power transmission device according to at least one of the claims 13 to 23, **characterized in that** the retaining cage (75) includes two surfaces (91,92) arranged in a screw-like manner inclined in the space for abutting on screw-like surfaces assigned thereto on a front side (93) of the control housing (71).

25. Brake power transmission device according to claim 24, **characterized in that** the control housing (71) includes at least one projection (97) with a form-locking effect for engaging into the retaining cage (75) or catching a spring plate (94).

26. Brake power transmission device according to any one or several of claims 14 to 25, **characterized in that** at least one substitute piece (102) can be inserted into the retaining cage (75) for influencing the characteristic boosting line.

## Revendications

1. Dispositif de multiplication de force de freinage, notamment pour véhicule automobile, comprenant un organe d'entrée (2), pouvant être actionné et comportant un piston de valve (7), un organe de sortie (3) servant à appliquer une force d'amplification notamment sur un maître-cylindre de frein, et une valve de commande disposée dans un boîtier de commande (5, 5', 5") et servant à la régulation de la force d'amplification, tandis que, dans la zone d'un organe de réaction (24), il est prévu un élément de pression (10, 10', 10") pouvant être déplacé axialement qui prend appui sur l'organe d'entrée (2) ou le boîtier de commande (5, 5', 5") et permet de ce fait une modification du rapport de multiplication de force, **caractérisé en ce que** l'élément de pression (10, 10', 10", 88) peut être relié d'une manière séparable, au moyen d'un élément d'accouplement (16, 40, 54), au boîtier de commande (5, 5', 5") pour augmenter l'amplification en fonction d'un déplacement relatif entre l'organe d'entrée (2, 70) et le boîtier de commande (5, 5', 5", 71).

2. Dispositif de multiplication de force de freinage suivant la revendication 1, **caractérisé en ce qu'**à l'élément de pression (10, 10', 10"), il est associé un élément d'accouplement (16, 40, 54) qui est appliqué sur un boîtier de commande (5, 5', 5") et qui réagit par complémentarité de formes et d'une manière séparable sur l'élément de pression (10, 10', 10").

3. Dispositif de multiplication de force de freinage suivant une ou plusieurs des revendications précédentes, **caractérisé en ce que** l'élément de pression (10, 10', 10") est guidé, de façon à pouvoir se déplacer axialement, sur une surface périphérique du piston de valve (7).

4. Dispositif de multiplication de force de freinage suivant une ou plusieurs des revendications précédentes, **caractérisé en ce que** l'élément d'accouplement (16, 40, 54) comporte une surface de commande (17), laquelle surface de commande (17) peut, en fonction de l'avance du piston de valve (7), prendre une première et une seconde positions de commutation, et **en ce que**, dans la seconde position de commutation, l'élément d'accouplement (16) agit sur l'élément de pression (10).

5. Dispositif de multiplication de force de freinage suivant une ou plusieurs des revendications précédentes, **caractérisé en ce que** l'élément d'accouplement (16, 40, 54) est disposé de façon à pouvoir être déplacé en direction radiale et peut être appliqué, par au moins une surface d'appui, sur l'élément de pression (10, 10', 10").

6. Dispositif de multiplication de force de freinage suivant une ou plusieurs des revendications précédentes, **caractérisé en ce que** l'élément d'accouplement (40, 54) est réalisé de façon à pouvoir céder en direction radiale.

7. Dispositif de multiplication de force de freinage suivant une ou plusieurs des revendications précédentes, **caractérisé en ce que** l'élément d'accouplement (40, 54) est soumis à une précontrainte radialement vers l'intérieur.

8. Dispositif de multiplication de force de freinage suivant une ou plusieurs des revendications précédentes, **caractérisé en ce qu'**il est prévu un organe de libération qui coopère avec l'élément d'accouplement.

9. Dispositif de multiplication de force de freinage suivant la revendication 8, **caractérisé en ce que** l'organe de libération peut être appliqué directement ou indirectement sur une butée d'extrémité d'un boîtier d'amplificateur.

10. Dispositif de multiplication de force de freinage suivant la revendication 8 ou 9, **caractérisé en ce que** l'organe de libération peut être appliqué sur un organe transversal qui peut être appliqué sur la butée d'extrémité du boîtier d'amplificateur.

11. Dispositif de multiplication de force de freinage suivant une ou plusieurs des revendications 8 à 10, **caractérisé en ce que** l'élément d'accouplement (16, 40, 54) comporte au moins une section en forme de coin, inclinée vis-à-vis d'un axe principal, qui est prévue pour l'appui sur une surface d'expulsion de l'organe de libération (18, 46).

12. Dispositif de multiplication de force de freinage suivant une ou plusieurs des revendications précédentes, **caractérisé en ce qu'**un organe de commande (50) est prévu et comporte une partie en saillie (52), laquelle partie en saillie (52) s'engage, dans une première position de commutation de l'organe de commande (50), dans un passage (53) prévu pour l'élément d'accouplement (54) et, dans une seconde position de commutation, libère le passage (53) prévu pour l'élément d'accouplement (54).

13. Dispositif de multiplication de force de freinage suivant une ou plusieurs des revendications précédentes, **caractérisé en ce que** l'élément d'accouplement (73) comprend, pour l'accouplement par complémentarité de formes, au moins un corps de roulement (74).

14. Dispositif de multiplication de force de freinage suivant la revendication 13, **caractérisé en ce que** le corps de roulement (74) est disposé d'une manière fixe en direction axiale dans une cage de maintien (75), et **en ce que** le corps de roulement (74) peut être déplacé en direction axiale dans deux positions d'extrémité.

15. Dispositif de multiplication de force de freinage suivant la revendication 14, **caractérisé en ce qu'**un profil de commande (83) est prévu d'une manière décalée radialement vis-à-vis du corps de roulement (73), **en ce qu'**un déplacement axial du profil de commande (83) provoque un déplacement radial du corps de roulement (74) dans l'une des deux positions d'extrémité.

16. Dispositif de multiplication de force de freinage suivant au moins l'une des revendications 13 à 15, **caractérisé en ce que** l'élément de pression (88) est en appui, pour la première position d'extrémité du corps de roulement (74), sur un piston de valve (85), et **en ce que** le corps de roulement (74) peut être déplacé dans l'autre position d'extrémité, avec un déplacement du profit de commande (83) vis-à-vis du boîtier de commande (71), d'une manière telle que l'élément de pression (88) est en appui en direction axiale, indirectement au moyen du corps de roulement (74) et de la cage de maintien (75), sur le boîtier de commande (71).

17. Dispositif de multiplication de force de freinage suivant au moins l'une des revendications 13 à 16, **caractérisé en ce que** le profil de commande (83) est prévu à la périphérie d'une bague (84), et **en ce que** la bague (84) entoure d'une manière concentrique le piston de valve (85).

18. Dispositif de multiplication de force de freinage suivant la revendication 17, **caractérisé en ce que** le profil de commande (83) présente une forme de rampe comportant une partie chanfreinée.

19. Dispositif de multiplication de force de freinage suivant la revendication 18, **caractérisé en ce que** le profil de commande (83) est adapté au corps de roulement (74) et épouse au moins partiellement la forme de celui-ci.

20. Dispositif de multiplication de force de freinage suivant au moins l'une des revendications 13 à 19, **caractérisé en ce qu'**une bille est prévue en tant que corps de roulement (74).

21. Dispositif de multiplication de force de freinage suivant au moins l'une des revendications 13 à 20, **caractérisé en ce que** la cage de maintien (75) est de forme tubulaire et comprend un premier embout (76) côté organe d'entrée et un second embout (78) côté organe de sortie, un fond (80) dirigé radialement vers l'intérieur étant prévu entre les deux embouts (76, 78).

22. Dispositif de multiplication de force de freinage suivant au moins l'une des revendications 13 à 21, **caractérisé en ce que** le second embout (78) s'emboîte axialement sur l'organe de réaction (79).

23. Dispositif de multiplication de force de freinage suivant au moins l'une des revendications 13 à 22, **caractérisé en ce que**, sur le fond (80) de la cage de maintien, il est prévu un collet (81) coudé axialement et comportant au moins un évidement pour au moins un corps de roulement (74).

24. Dispositif de multiplication de force de freinage suivant au moins l'une des revendications 13 à 23, **caractérisé en ce que** la cage de maintien (75) comporte deux surfaces (91, 92) disposées d'une manière inclinée dans l'espace suivant une forme hélicoïdale et destinées à l'appui sur des surfaces de forme hélicoïdale associées prévues sur une face frontale (93) du boîtier de commande (71).

25. Dispositif de multiplication de force de freinage suivant la revendication 24, **caractérisé en ce que** le boîtier de commande (71) comporte au moins un talon d'enclenchement (97) agissant par complémentarité de formes et servant à la venue en prise dans la cage de maintien (75) ou destiné à agir sur une coupelle de ressort (94).

26. Dispositif de multiplication de force de freinage suivant une ou plusieurs des revendications 14 à 25, **caractérisé en ce que**, pour influer sur la ligne caractéristique d'amplification, au moins une pièce de remplacement (102) être placée à l'intérieur de la cage de maintien (75).
